# EUROPEAN PATENT APPLICATION

(11) **EP 3 719 964 A1**
(43) Date of publication of application: **07.10.2020**
(21) Application number: 17934292.8
(22) Date of filing: 07.12.2017
(51) Int. Cl.: H02K 3/28, H02P 25/18

(54) **PERMANENT MAGNET MOTOR DEVICE HAVING WINDING COIL WITH VARIABLE TURNS AND CONTROL METHOD THEREOF**

(71) Applicant: Yu, Li-Chien, Vancouver, V6J5B9, BC (CA)
(72) Inventor: LIU, Sheng-Yen, Taichung City Taiwan 40451 (TW)
(74) Representative: Lermer, Christoph
(86) International application number: PCT/CN2017/000719
(87) International publication number: WO 2019/109196

(57) **Abstract**

A kind of permanent magnet motor device with coil windings that have variable numbers of turns. The device may include windings and a power supply. The windings may include multiple coils. The power supply may connect to the coils through a switching device and cause these coils in various combinations of series connections or parallel connections to achieve a motor with increased power savings, torque, rotation speed, or power.

## Description

### BACKGROUND

### Field of the Invention

The present invention relates to a kind of motor device, specifically a kind of permanent magnet motor device, with coil windings that have variable numbers of turns. The present invention also relates to the method of control for said motor device.

### Related Prior Art

Due to the increasingly serious problems of global warming and air pollution, systems that can safeguard the environment have seen large-scale development. Therefore, how to reduce greenhouse gas emissions has become an important topic of discussion. One of the main sources of greenhouse gas emissions is vehicles. Because of this, today, as environmental awareness has been gaining ground, electric cars have already become a mainstream item of the future. However, the permanent magnet motors that current electric cars often use still have many shortcomings that need improvement.

For example, in order to make the motors of electric cars have higher torque, there is usually not much consideration with regards to power savings when designing the motor. For this reason, the amount of power being consumed by the motor ends up being extremely high, and this in turn reduces the driving range of the electric car.

Moreover, when making a motor with higher energy savings, there is usually not much consideration with regards to torque when designing the motor. For this reason, although the above-mentioned design can make an electric car possess a greater driving range, in situations where the car requires higher torque, such as when one starts driving the car, climbs up slopes, carries heavy loads, etc., it will be unable to provide better performance.

In addition, when making a motor that is able to balance both power savings and torque at the same time, it is usually necessary to use a larger motor or add a transmission. This in turn will cause the volume and weight of the electric car to increase, and then this will influence the design of the electric car as well as necessitate an increased battery capacity.

In connection with the electric load needs of motors in their application, there are different designs with regards to power savings, torque, rotation speed, or power. Therefore, how to produce a kind of permanent magnet motor device that is capable of effectively improving each kind of shortcoming of permanent magnet motors of the prior art has already become a pressing issue.

### SUMMARY

In light of the above-mentioned issue with the prior art, one of the purposes of the present invention is to provide a kind of permanent magnet motor device with coil windings that have variable numbers of turns and its control method in order to resolve each kind of issue related to the permanent magnet motors of the prior art.

In line with one of the purposes of the present invention, the present invention relates to a permanent magnet motor device with coil windings that have variable numbers of turns which may include a winding, a power supply, a polarity conversion device, and a switching device. The windings may include multiple coils. The polarity conversion device may be connected to the power supply and the winding in order to control magnetic pole conversion. The switching device may include multiple switches, and the aforementioned multiple switches may be connected separately to the aforementioned multiple coils. The switching device can switch the aforementioned multiple switches in order to change the series-parallel state of the aforementioned multiple coils.

In a preferred embodiment, when the switching device switches the aforementioned switches to change the series-parallel state of the aforementioned coils, the performance of the permanent magnet motor device changes.

In a preferred embodiment, the properties of the permanent magnet motor device that change include one, two, or more of following: power savings, torque, rotation speed, or power.

In line with one of the purposes of the present invention, the present invention relates to a control method for the permanent magnet motor device that may include the following steps: connecting the multiple coils of the winding of the motor and the power supply with the polarity conversion device to control magnetic pole conversion, connecting the multiple switches of the switching device separately with the aforementioned multiple coils, as well as switching the aforementioned multiple switches to change the series-parallel state of the aforementioned multiple coils.

In a preferred embodiment, the control method for the permanent magnet motor device may also include the following step: changing the properties of the permanent magnet motor device through the different series-parallel states of the aforementioned multiple coils.

In a preferred embodiment, the properties of the permanent magnet motor device that change include one, two, or more of following: power savings, torque, rotation speed, and power.

In light of the above, the present invention's permanent magnet motor device with coil windings that have variable numbers of turns and its control method may possess multiple of the following advantages:
(1) In one embodiment of the present invention, each of the windings on the armature of the permanent magnet motor device may include multiple coils, and the aforementioned multiple coils may be connected to the switching device through a composition of multiple switches to change the series-parallel state of the aforementioned multiple coils in order to regulate the properties of the motor depending on whether the situation necessitates higher power savings or higher rotation speed, thus making the electric car not only possess a greater driving range but also allows the car to have excellent performance when the situation necessitates higher output.
(2) In one embodiment of the present invention, the permanent magnet motor device can regulate the rotation speed and power saving effect of the motor by changing the series-parallel state of each of the multiple coils of the winding on the armature, allowing the properties of the motor to change depending on whether rotation speed or power savings is needed, greatly increasing the performance of the motor.
(3) In one embodiment of the present invention, the motor can regulate rotation speed and power savings by changing the series-parallel state of each of the multiple coils of the winding on the armature, therefore making it unnecessary to increase the volume or weight of the motor and thus not affecting the design of the electric car.
(4) In one embodiment of the present invention, the invention can be applied to permanent magnet motors, for example, brushless DC motors and brushed DC motors.
(5) In one embodiment of the present invention, the design of the permanent magnet motor device is simple and therefore makes it possible to reach the desired effect without needing to greatly increase costs.

### BRIEF DESCRIPTION OF THE DRAWINGS

Figure 1 is a diagram of the motor device of the first embodiment of the present invention showing a permanent magnet motor device with coil windings that have variable numbers of turns.
Figure 2 is a first schematic diagram of the first embodiment of the present invention having windings of the permanent magnet motor device with coil windings that have variable numbers of turns.
Figure 3 is a second schematic diagram of the permanent magnet motor device with coil windings that have variable numbers of turns of the present invention.
Figure 4 is a third schematic diagram of the permanent magnet motor device with coil windings that have variable numbers of turns of the present invention.
Figure 5 is a first schematic diagram of the permanent magnet motor device with coil windings that have variable numbers of turns of the present invention.
Figure 6 is a second schematic diagram of the windings of the permanent magnet motor device with coil windings that have variable numbers of turns of the present invention.
Figure 7 is a third schematic diagram of the permanent magnet motor device with coil windings that have variable numbers of turns of the present invention.
Figure 8 is a fourth schematic diagram of the permanent magnet motor device with coil windings that have variable numbers of turns of the present invention.
Figure 9 is a first schematic diagram of the permanent magnet motor device with coil windings that have variable numbers of turns of the present invention.
Figure 10 is a second schematic diagram of the permanent magnet motor device with coil windings that have variable numbers of turns of the present invention.
Figure 11 is a third schematic diagram of the permanent magnet motor device with coil windings that have variable numbers of turns of the present invention.
Figure 12 is a fourth schematic diagram of the permanent magnet motor device with coil windings that have variable numbers of turns of the present invention.
Figure 13 is a fifth schematic diagram of the permanent magnet motor device with coil windings that have variable numbers of turns of the present invention.
Figure 14 is a schematic diagram of the fourth embodiment of the permanent magnet motor device with coil windings that have variable numbers of turns of the present invention.
Figure 15 is a flowchart of one embodiment of the control method of the permanent magnet motor device of the present invention.

Reference numerals of the elements in the drawings: 1-permanent magnet motor device; 11-magnet; 12- armature; 121-armature teeth; 122-winding; 13-switching device; L1-first coil; L2-second coil; L3-third coil; L4-fourth coil; L5-fifth coil; L6-sixth coil; S1-first switch; S2-second switch; S3-third switch; S4-fourth switch; S5-fifth switch; S6-sixth switch; S7-seventh switch; S8-eighth switch; S9-ninith switch; S10-tenth switch; S11-eleventh switch; S12-twelfth switch; S13-thirteenth switch; S14-fourteenth switch; S15-fifteenth; 14-polarity conversion device; E+-first electrode; E--second electrode; N, S-magnetic pole; I-current; S151.......S154-steps.

### DETAILED DESCRIPTION

The embodiment of the present invention's permanent magnet motor device with coil windings that have variable numbers of turns and its control method will be described in more detail below with reference to the associated drawings. In order to make the illustration of the drawings clearer and more convenient, the dimensions and proportions of each part of the drawings may have been magnified or reduced in their presentation. In the following description and/or patent claim, whenever "connect" or "couple" is mentioned in relation to another component, this can mean being directly connected or coupled to the other component or it can mean being connected or coupled through an intervening component. Moreover, whenever "directly connect" or "directly couple" is mentioned in relation to another component, this means that there is no intervening component. Other words that are used for describing the relationship between the components or layers should be interpreted in the same way. In order to facilitate understanding, components that are the same in the following embodiments are marked and illustrated using the same symbols.

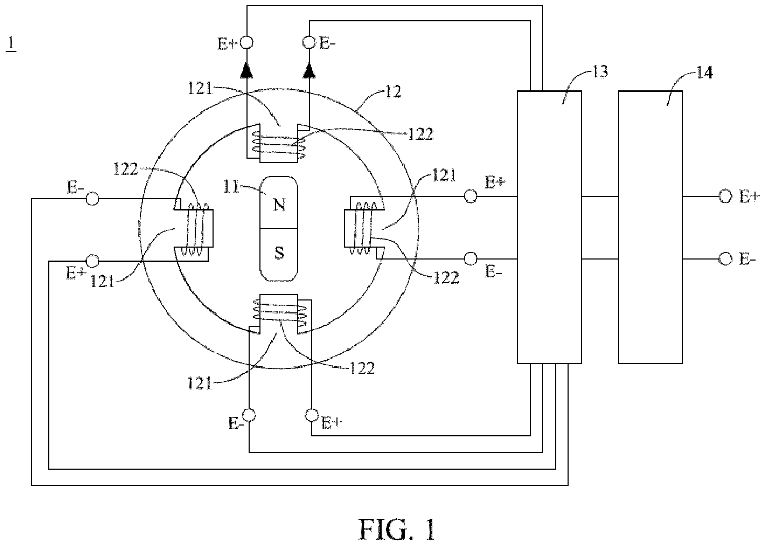

Please refer to Figure 1, which is a diagram of the motor device of the first embodiment of the permanent magnet motor device with coil windings that have variable numbers of turns of the present invention. As shown in the figure, the permanent magnet motor device with coil windings that have variable numbers of turns 1 may include a magnet 11, an armature 12, a switching device 13, a polarity conversion device 14 and a power supply (in order to make the drawing clearer, the figure only shows the electrodes of the power supply as E+ and E-).

The magnet 11 may produce a magnetic field.

The armature 12 may contain multiple armature teeth 121 and multiple windings 122. The aforementioned multiple windings 122 may be wound separately around the aforementioned multiple armature teeth 121, causing the armature 12 to produce a magnetic field that may interact with the magnetic field produced by the magnet 11.

The polarity conversion device 14 may be connected with the power supply and may be connected to the aforementioned multiple windings 122 through the switching device 13 in order to control magnetic pole conversion. In a preferred embodiment, if the permanent magnet motor device 1 is a brushed motor, then the polarity conversion device 14 can be a brush. If the permanent magnet motor device 1 is a brushless motor, then the polarity conversion device 14 can be an electronic switch, such as an MOS, BJT, or another transistor.

In this embodiment, the permanent magnet motor device 1 can be an inner rotor device, but this is only an example for the purpose of explanation. In other preferred embodiments, the permanent magnet motor device 1 can also be an outer rotor device or other various different motor devices.

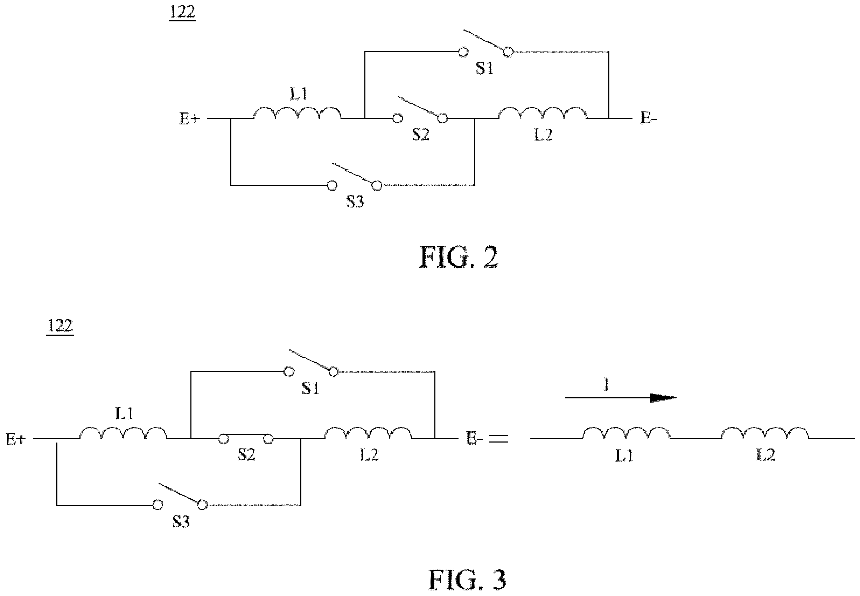

Please refer to Figure 2, Figure 3, and Figure 4, which are the first schematic diagram, the second schematic diagram and the third schematic diagram of the windings of the first embodiment of the permanent magnet motor device with coil windings that have variable numbers of turns of the present invention. As shown in Figure 2, each winding 122 may include a first coil L1 and a second coil L2. In this embodiment, the number of turns is 50 for the first coil L1 and the second coil L2.

The switching device 13 may include multiple switches. In this embodiment, the switching device 13 may include a first switch S1, a second switch S2, and a third switch S3. The first switch S1, the second switch S2, and the third switch S3 are connected separately to the first coil L1 and the second coil L2, and the switching device 13 can switch the first switch S1, the second switch S2, and the third switch S3 to change the series-parallel state of the first coil L1 and the second coil L2.

The first end of the first coil L1 can connect separately with the first and second ends of the second coil L2 through the first switch S1 and the second switch S2, and the second end of the first coil L1 can connect with the first electrode E+ of the power supply (not shown in the figure) and can also connect with the second end of the second coil L2 through the third switch S3. The first end of the second coil L2 can connect with the second electrode E- of the power supply.

As shown in Figure 3, when the second switch S2 conducts electricity, the first coil L1 and the second coil L2 are in series state. At this time, the total impedance of the winding 122 is equal to a coil with 100 turns and the total current that is passing through the winding is I. When the first coil L1 and the second coil L2 are in series connection, this is the same as the winding 122 possessing a coil with 100 turns. At this time, the permanent magnet motor device 1 is in a state in which the power saving effect is higher, but the rotation speed is lower.

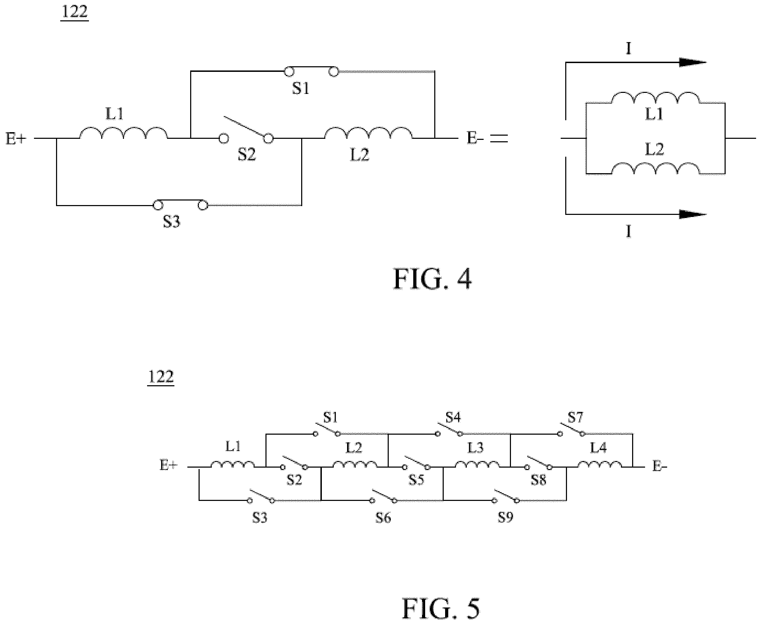

As shown in Figure 4, when the first switch S1 and the third switch S3 are conducting electricity, the first coil L1 and the second coil L2 are in parallel state. At this time, the total impedance of the winding 122 is equal to a coil with 50 turns and the total current passing through the winding 122 is 21. When the first coil L1 and the second coil L2 are in parallel connection, this is the same as the winding 122 possessing two parallel wound coils each with 50 turns. At this time, the permanent magnet motor device 1 is in a state in which the rotation speed is higher but the power saving effect is lower.

Based on the embodiment of the present invention, the winding 122 on each of the armature teeth 121 of the permanent magnet motor device 1 may include multiple coils L1 and L2. Furthermore, the aforementioned multiple coils L1 and L2 may be connected through multiple switches to change the series-parallel state of the aforementioned multiple coils in order to regulate the properties of the motor depending on whether the situation necessitates a higher power saving effect or a higher rotation speed, thus making the electric car not only possess a greater driving range but also allows the car to have excellent performance when the situation necessitates higher rotation speed. In addition, the aforementioned structural design allows the permanent magnet motor device 1 to be able to balance both the power saving effect and the rotation speed without needing to increase the volume or weight of the design, which therefore can truly improve the shortcomings of the prior art.

It can be seen from the above that this embodiment of the permanent magnet motor device 1 can be connected with the coils through a switching device and cause these coils in various combinations of series connections or parallel connections to achieve a motor with increased power savings, torque, rotation speed, or power.

This embodiment of the permanent magnet motor device is only an example. The permanent magnet motor device can be applied to various different kinds of permanent magnet motors, for example, brushless DC motors and brushed DC motors, and its structure can be changed depending on actual needs. The present invention is by no means limited to this embodiment.

It is worth mentioning that, based on the embodiment of the present invention, each of the windings of the permanent magnet motor device may include multiple coils, and the aforementioned multiple coils may be connected through a switching device to change the series-parallel state of the aforementioned multiple coils in order to regulate the properties of the motor depending on whether the situation necessitates a higher power saving effect or a higher rotation speed, thus making the electric car not only possess a greater driving range but also allow for excellent performance when the situation necessitates higher rotation speed.

In addition, when using prior art to make a motor that can balance both power savings and rotation speed at the same time, it is usually necessary to use a larger motor or add a transmission. So then, this will cause the volume and weight of the electric car to increase, and then this will influence the design of the electric car as well as necessitate an increased battery capacity. In contrast to this, based on the embodiment of the present invention, the permanent magnet motor device can regulate the rotation speed and power saving effect of the motor by changing the series-parallel state of each of the coils of the winding, therefore making it unnecessary to increase the volume or weight of the motor and thus not affecting the design of the electric car.

In addition, based on the embodiment of the present invention, the invention can be applied to various different types of permanent magnet motors, for example, brushless DC motors, brushed DC motors, etc. and hence the applications for the present invention are extremely broad.

Furthermore, based on the embodiment of the present invention, the structural design of the permanent magnet motor device is simple and therefore makes it possible to reach the desired effect without needing to greatly increase costs. It can be seen from the above that the present invention truly possesses patentability with an inventive step.

Please refer to Figure 5, Figure 6, Figure 7, and Figure 8, which are the first schematic diagram, the second schematic diagram and the third schematic diagram of the windings of the second embodiment of the permanent magnet motor device with coil windings that have variable numbers of turns of the present invention, and please refer to Figure 1 at the same time as you refer to these figures.

The permanent magnet motor device 1 of this embodiment is similar to the preceding embodiment, therefore no more will be stated about this embodiment than what is necessary. The difference between this embodiment and the preceding embodiment is that, in this embodiment, each winding 122 possesses a structure that is different from that used in the preceding embodiment.

As shown in Figure 5, each winding 122 may include a first coil L1, a second coil L2, a third coil L3, and a fourth coil L4. In this embodiment, the number of turns is 25 for the first coil L1, the second coil L2, the third coil L3, and the fourth coil L4.

In this embodiment, the switching device 13 may include a first switch S1......ninth switch S9. The first switch S1......ninth switch S9 may be connected separately with the first coil L1 ......fourth coil L4, and the switching device 13 can switch the first switch S1......ninth switch S9 to change the series-parallel state of the first coil L1......fourth coil L4.

The first end of the first coil L1 can connect separately with the first and second ends of the second coil L2 through the first switch S1 and the second switch S2, and the second end of the first coil L1 can connect with the first electrode E+ of the power supply (not shown in the figure) and can also connect with the second end of the second coil L2 through the third switch S3.

The first end of the second coil L2 can connect separately with the first end and second end of the third coil L3 through the fourth switch S4 and the fifth switch S5. The second end of the second coil L2 can connect to the second end of the third coil L3 through the sixth switch S6.

The first end of the third coil L3 can connect separately with the first end and the second end of the fourth coil L4 through the seventh switch S7 and the eighth coil S8. The second end of the third coil L3 can connect with the second end of the fourth coil L4 through the ninth switch S9. The first end of the fourth coil L4 can connect with the second electrode E- of the power supply.

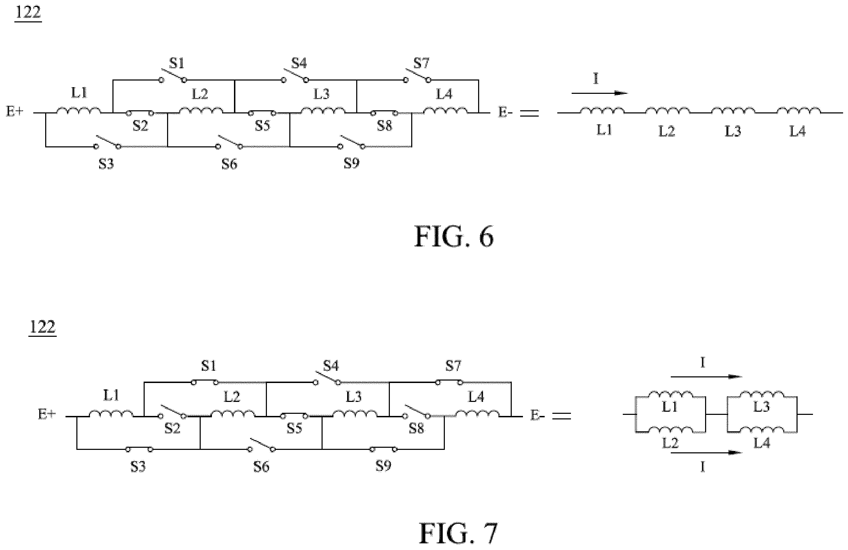

As shown in Figure 6, when the second switch S2, the fifth switch S5, and the eighth switch S8 are conducting electricity, the first coil L1, the second coil L2, the third coil L3, and the fourth coil L4 are in series state. At this time, the total impedance of the winding 122 is equal to a coil with 100 turns and the total current that is passing through the winding is I. When the first coil L1, the second coil L2, the third coil L3, and the fourth coil L4 are in series connection, this is the same as the winding 122 possessing a coil with 100 turns. At this time, the permanent magnet motor structure 1 is in a state in which the power saving effect is higher but the rotation speed is lower.

As shown in Figure 7, when the first switch S1, the third switch S3, the fifth switch S5, the seventh switch S7 and the ninth switch S9 are conducting electricity, the first coil L1 and the second coil L2 are in parallel, the third coil L3 and the fourth coil L4 are in parallel, and the parallel structure of the first coil L1 and the second coil L2 is in series with the parallel connection of the third coil L3 and the fourth coil L4. At this time, the total impedance of the winding 122 is equal to a coil with 50 turns and the total current passing through the winding 122 is 2I. At this time, the power saving effect of the permanent magnet motor device 1 is lowered one level, but the rotation speed increases one level.

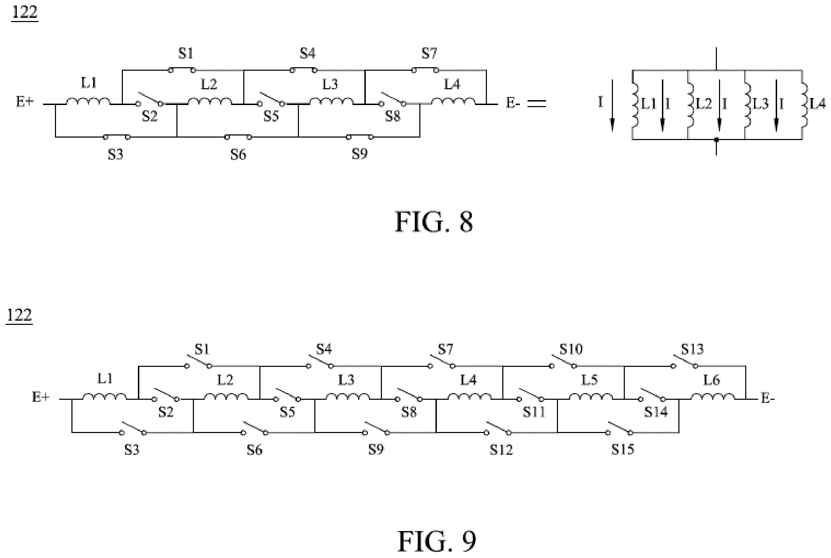

As shown in Figure 8, when the first switch S1, the third switch S3, the fourth switch S4, the sixth switch S6, the seventh switch S7, and the ninth switch S9 are conducting electricity, the first coil L1, the second coil L2, the third coil L3, and the fourth coil L4 are in parallel state. At this time, the total impedance of the winding 122 is equal to a coil with 25 turns, and the total current that is passing through the winding is 4I. When the first coil L1, the second coil L2, the third coil L3, and the fourth coil L4 are in parallel, this is equal to a winding 122 possessing 4 parallel wound coils with 25 turns each. At this time, the power saving effect of the permanent magnet motor device 1 is lowered one level, but the rotation speed increases one level.

Please refer to Figure 9, Figure 10, Figure 11, Figure 12, and Figure 13, which are the first schematic diagram, the second schematic diagram, the third schematic diagram, the fourth schematic diagram and the fifth schematic diagram of the windings of the third embodiment of the permanent magnet motor device with coil windings that have variable numbers of turns of the present invention, and please refer to Figure 1 at the same time as you refer to these figures.

The permanent magnet motor device 1 of this embodiment is similar to the preceding embodiment. Therefore, no more will be stated about this embodiment than what is necessary. The difference between this embodiment and the preceding embodiment is that, in this embodiment, each winding 122 possesses a structure that is different from that used in the preceding embodiment.

As shown in Figure 9, each winding 122 may include a first coil L1, a second coil L2, a third coil L3, a fourth coil L4, a fifth coil L5 and a sixth coil L6. In this embodiment, the number of turns is 10 for the first coil L1, the second coil L2, the third coil L3, the fourth coil L4, the fifth coil L5, and the sixth coil L6.

In this embodiment, the switching device 13 may include a first switch S1......fifteenth switch S15. The first switch S1......ninth switch S9 may be connected separately with the first coil L1......sixth coil L6, and the switching device 13 can switch the first switch S1......fifteenth switch S15 to change the series-parallel state of the first coil L1......sixth coil L6.

The first end of the first coil L1 can connect separately with the first and second ends of the second coil L2 through the first switch S1 and the second switch S2, and the second end of the first coil L1 can connect with the first electrode E+ of the power supply (not shown in the figure) and can also connect with the second end of the second coil L2 through the third switch S3.

The first end of the second coil L2 can connect separately with the first end and second end of the third coil L3 through the fourth switch S4 and the fifth switch S5. The second end of the second coil L2 can connect to the second end of the third coil L3 through the sixth switch S6.

The first end of the third coil L3 can connect separately with the first end and second end of the fourth coil L4 through the seventh switch S7 and the eighth switch S8. The second end of the third coil L3 can connect to the second end of the fourth coil L4 through the ninth switch S9.

The first end of the fourth coil L4 can connect separately with the first end and second end of the fifth coil L5 through the tenth switch S10 and the eleventh switch S11. The second end of the fourth coil L4 can connect to the second end of the fifth coil L5 through the twelfth switch S12.

The first end of the fifth coil L5 can connect separately with the first end and the second end of the sixth coil L6 through the thirteenth switch S13 and the fourteenth switch S14. The second end of the fifth coil L5 can connect with the second end of the sixth coil through the fifteenth switch S15. The first end of the sixth coil L6 can connect with the second electrode E- of the power supply.

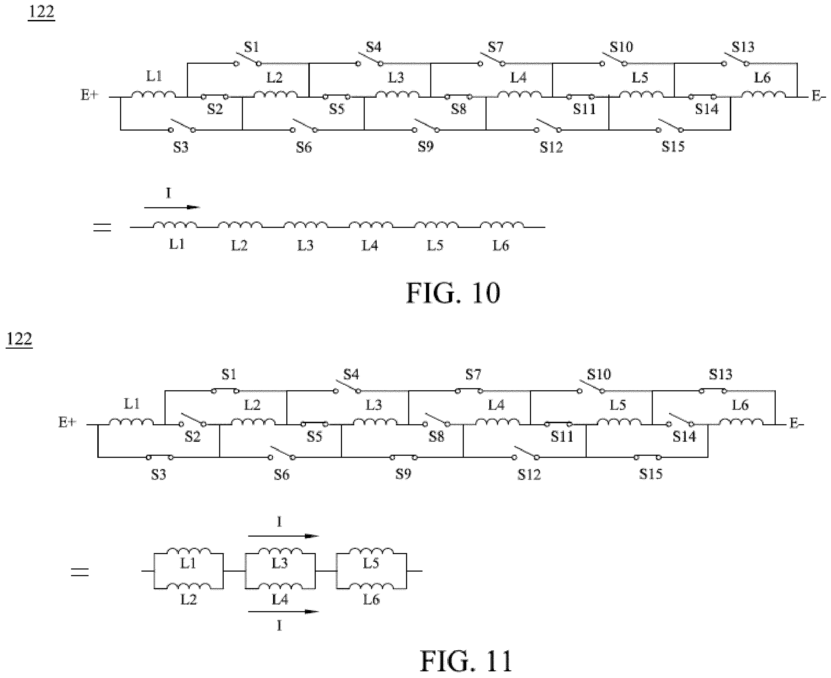

As shown in Figure 10, when the second switch S2, the fifth switch S5, the eighth switch S8, the eleventh switch S11, and the fourteenth switch S14 are conducting electricity, the first coil L1, the second coil L2, the third coil L3, the fourth coil L4, the fifth coil L5, and the sixth coil L6 are in series state. At this time, the total impedance of the winding 122 is equal to a coil with 60 turns and the total current that is passing through the winding is I. When the first coil L1, the second coil L2, the third coil L3, the fourth coil L4, the fifth coil L5, and the sixth coil L6 are in series connection, this is the same as the winding 122 possessing a coil with 60 turns. At this time, the permanent magnet motor structure 1 is in a state in which the power saving effect is higher, but the rotation speed is lower.

As shown in Figure 11, when the first switch S1, the third switch S3, the fifth switch S5, the seventh switch S7, the ninth switch S9, the eleventh switch S11, the thirteenth switch S13, and the fifteenth switch S15 are conducting electricity, the first coil L1 and the second coil L2 are in parallel, the third coil L3 and the fourth coil L4 are in parallel, the fifth coil L5 and the sixth coil L6, the parallel structure of the first coil L1 and the second coil L2, the parallel structure of the third coil L3 and the fourth coil L4, and the parallel structure of the fifth coil L5 and the sixth coil L6 are mutually in series. At this time, the total impedance of the winding 122 is equal to a coil with 30 turns and the total current passing through the winding 122 is 2I. At this time, the power saving effect of the permanent magnet motor device 1 is lowered one level, but the rotation speed increases one level.

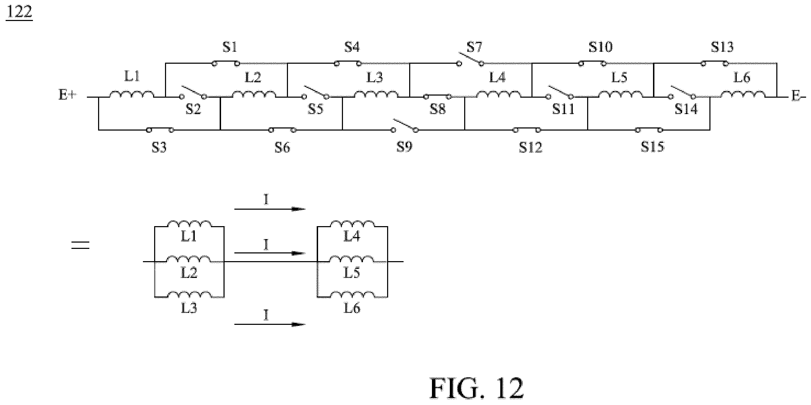

As shown in Figure 12, when the first switch S1, the third switch S3, the fourth switch S4, the sixth switch S6, the eighth switch S8, the tenth switch S10, the twelfth switch S12, the thirteenth switch S13 and the fifteenth switch S15 are conducting electricity, the first coil L1, the second coil L2, and the third coil L3 are in parallel, the fourth coil L4, the fifth coil L5, and the sixth coil L6 are in parallel, and the parallel structure of the first coil L1, the second coil L2, and the third coil L3 and the parallel structure of the fourth coil L4, the fifth coil L5, and the sixth coil L6 are in series. At this time, the total impedance of the winding 122 is equal to a coil with 20 turns and the total current passing through the winding 122 is 3I. At this time, the power saving effect of the permanent magnet motor device 1 is lowered one level, but the rotation speed increases one level.

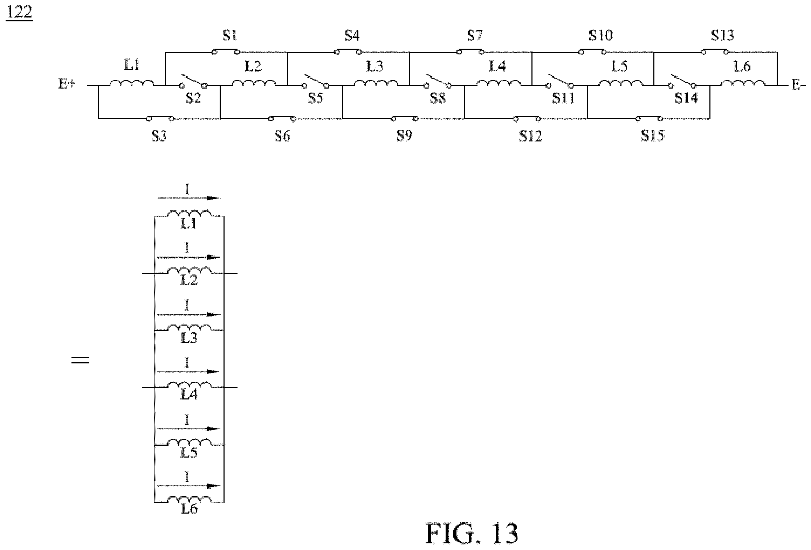

As shown in Figure 13, when the first switch S1, the third switch S3, the fourth switch S4, the sixth switch S6, the seventh switch S7, the eighth switch S8, the ninth switch S9, the tenth switch S10, the twelfth switch S12, the thirteenth switch S13 and the fifteenth switch S15 are conducting electricity, the first coil L1, the second coil L2, the third coil L3, the fourth coil L4, the fifth coil L5, and the sixth coil L6 are in parallel state. At this time, the total impedance of the winding 122 is equal to a coil with 10 turns and the total current passing through the winding 122 is 6I. When the first coil L1, the second coil L2, the third coil L3, the fourth coil L4, the fifth coil L5, and the sixth coil L6 are in parallel, this is equal to a winding 122 possessing 6 parallel wound coils with 10 turns each. At this time, the power saving effect of the permanent magnet motor device 1 is lowered one level, but the rotation speed increases one level.

This embodiment of the permanent magnet motor device is only an example. The permanent magnet motor device can be applied to various different kinds of permanent magnet motors, for example, brushless DC motors and brushed DC motor, and its structure can be changed depending on actual needs. The present invention is by no means limited to this embodiment.

It can be seen from the above that each winding 122 of the permanent magnet motor device in the two previously mentioned embodiments possesses even more coils. Therefore, it can provide even more changes when necessary, allowing the permanent magnet motor device 1 to be to provide three different levels of torque, three different levels of rotation speed, and three different levels of power saving effect for adjustment, thus allowing the permanent magnet motor device 1 to be able to balance both torque and the power saving effect at the same time, greatly increasing the performance and applications of the permanent magnet motor device 1.

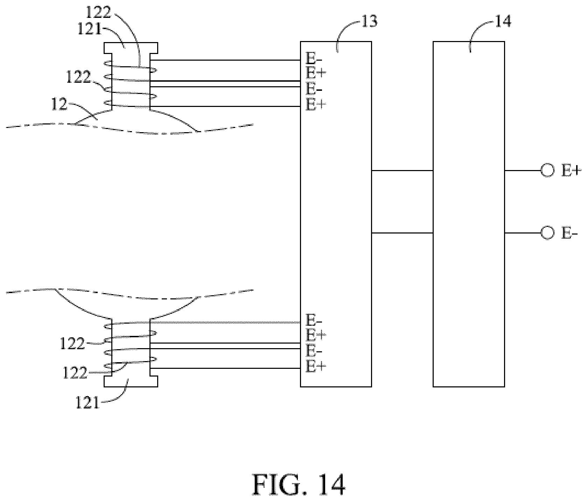

Please refer to Figure 14 which is the schematic diagram of the fourth embodiment of the permanent magnet motor device with coil windings that have variable numbers of turns of the present invention. As shown in the figure, the permanent magnet motor device with coil windings that have variable numbers of turns 1 may include a magnet, an armature 12, a polarity conversion device 14, and a power supply (in order to make the drawing clearer, some components such as the magnet and the power supply have been omitted from the figure).

The magnet may produce a magnetic field.

The armature 12 may include multiple armature teeth 121 and each armature tooth 121 may include multiple windings 122, the aforementioned multiple windings 122 of the aforementioned multiple armature teeth 121 may be connected with the power supply (not shown in the figure). The difference between this and previously mentioned embodiments is that, in this embodiment, each armature tooth may include multiple windings 122. The magnetic field produced by the armature 12 may interact with the magnetic field produced by the magnet 11.

The polarity conversion device 14 may be connected with the power supply and may be connected to the aforementioned multiple windings 122 through the switching device 13 in order to control magnetic pole conversion.

In addition to this, the permanent magnet motor device with coil windings that have variable numbers of turns 1 may also include a switching device 13 which may include multiple switches. The aforementioned multiple switches may connect separately with the aforementioned windings 122 of the aforementioned armature teeth. Therefore, the switching device 13 can switch the aforementioned switches in order to change the series-parallel state of the aforementioned windings 122 of the aforementioned armature teeth 121.

When the switching device 13 switches the aforementioned multiple switches to change the series-parallel state of the aforementioned windings 122 of the aforementioned armature teeth 121, the properties of the permanent magnet motor device, including its power saving effect, torque, rotation speed or power, also change, just like in previously mentioned embodiments.

Therefore, regulation of the properties of the permanent magnet motor device 1, including its power saving effect, torque, and rotation speed, can similarly be achieved through this embodiment of the permanent magnet motor device with coil windings that have variable numbers of turns 1, greatly increasing the performance and applications of the permanent magnet motor device 1.

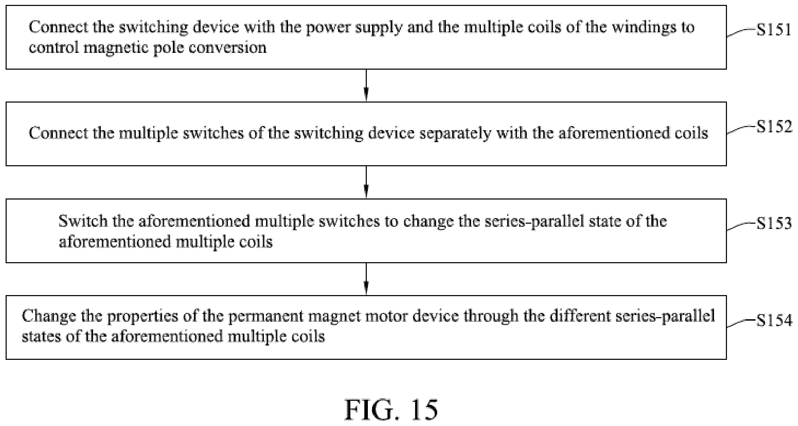

Please refer to Figure 15 which is a flowchart of one embodiment of the control method of the permanent magnet motor device of the present invention. A preferred embodiment of the control method of the permanent magnet motor device of the present invention may include the following steps:
Step S151: Connect the switching device with the power supply and the multiple coils of the windings to control magnetic pole conversion.
Step S152: Connect the multiple switches of the switching device separately with the aforementioned coils.
Step S153: Switch the aforementioned multiple switches to change the series-parallel state of the aforementioned multiple coils.
Step S154: Change the properties of the permanent magnet motor device through the different series-parallel states of the aforementioned multiple coils.

In summary, based on the embodiment of the present invention, each of the windings on the armature of the permanent magnet motor device may include multiple coils, and the aforementioned multiple coils may change the series-parallel state of the aforementioned multiple coils through a switching device with a composition of multiple switches in order to regulate the properties of the motor depending on whether the situation necessitates power savings, torque, or rotation speed, thus making the electric car not only possess a greater driving range but also allow for excellent performance when the situation necessitates higher output.

Furthermore, based on the embodiment of the present invention, the permanent magnet motor device can regulate the rotation speed and power saving effect of the motor by changing the series-parallel state of the multiple coils of the windings through a switching device, allowing the properties of the motor to change depending on whether rotation speed or the power saving effect is needed, greatly increasing the performance of the motor.

In addition, based on the embodiment of the present invention, the permanent magnet motor device can regulate the rotation speed and power saving effect of the permanent magnet motor device by changing the series-parallel state of each of the multiple coils of the winding through a switching device, therefore making it unnecessary to increase the volume or weight of the motor and thus not affecting the design of the electric car.

In addition, based on the embodiment of the present invention, the permanent magnet motor device can be applied to various different types of permanent magnet motors, for example, brushless DC motors and brushed motors, and hence the applications for the present invention are extremely broad.

Furthermore, based on the embodiment of the present invention, the structural design of the permanent magnet motor device is simple and therefore makes it possible to reach the desired effect without needing to greatly increase costs.

It can be clearly seen that the present invention is a breakthrough in the prior art that has truly achieved the desired increase in performance. Furthermore, it is also not easy for technicians in this field to conceive of such an invention. The inventive step and practicality that it possesses obviously conform with patent application requirements and the patent application has been submitted in accordance with the law. We sincerely request your office to review the patent application for this invention and approve it in order to assist in the creation of this invention. Your help in this matter is greatly appreciated.

The foregoing is for example purposes only and is not restrictive. Anything else that does not depart from the spirit and scope of the present invention and modifications or changes of the equivalents thereof are all included in the scope of the present patent claim.

## Claims

1. A permanent magnet motor device (1) with coil windings that have variable numbers of turns comprising:
a winding (122) that contains multiple coils (L1∼L6);
a power supply;
a polarity conversion device (14) that is connected to the power supply and the winding (122) in order to control magnetic pole conversion; and
a switching device (13) that contains multiple switches (S1∼S15), where said multiple switches (S1∼S15) are connected separately to said multiple coils (L1∼L6), and said switching device 13 can switch said switches (S1∼S15) to change the series-parallel state of said multiple coils (L1∼L6).

2. The permanent magnet motor device (1) of claim 1, where the switching device (13) switches the multiple switches (S1∼S15) to change the series-parallel state of the multiple coils (L1∼L6) thereby changing the properties of the permanent magnet motor device (1).

3. The permanent magnet motor device (1) of claim 2, where the properties of the permanent magnet motor device (1) that change include one or more of the following: power savings, torque, rotation speed, or power.

4. A control method for a permanent magnet motor device (1) that includes the following steps:
connecting a power supply and multiple coils (L1∼L6) of a winding (122) of the motor with a polarity conversion device (14) to control magnetic pole conversion,
connecting multiple switches (S1∼S15) of a switching device (13) separately with said multiple coils (L1∼L6); and
switching said multiple switches (S1∼S15) to change the series-parallel state of said multiple coils (L1∼L6).

5. The control method for a permanent magnet motor device (1) of claim 4, further including the following step:
changing the properties of the permanent magnet motor device (1) by changing the series-parallel states of said multiple coils (L1∼L6).

6. The control method for a permanent magnet motor device (1) of claim 5, where the properties of the permanent magnet motor device (1) that change include one or more of the following: power savings, torque, rotation speed, or power.
